# EUROPEAN PATENT APPLICATION

(11) **EP 4 510 648 A1**
(43) Date of publication of application: **19.02.2025**
(21) Application number: 23818956.7
(22) Date of filing: 26.05.2023
(51) Int. Cl.: H04W 4/24, H04W 4/14

(54) **METHOD FOR CALIBRATING SATELLITE SHORT MESSAGE COMMUNICATION CHARGING, AND DEVICE**

(30) Priority: 06.06.2022 CN 202210628039; 29.08.2022 CN 202211040684
(71) Applicant: Huawei Technologies Co., Ltd., Shenzhen, Guangdong 518129 (CN)
(72) Inventor: LI, Xianming, Shenzhen, Guangdong 518129 (CN); LI, Zhaoyang, Shenzhen, Guangdong 518129 (CN); CAO, Xiao, Shenzhen, Guangdong 518129 (CN); ZHAO, Cong, Shenzhen, Guangdong 518129 (CN)
(74) Representative: Isarpatent
(86) International application number: PCT/CN2023/096594
(87) International publication number: WO 2023/236791

(57) **Abstract**

This application provides a method for calibrating satellite short message communication charging and a device. In the method, an electronic device sends a target satellite short message to a satellite in response to a first operation. The electronic device performs a pre-fee-deduction operation for a satellite short message service, and updates a first parameter to a first value, where the first parameter is a remaining quota that is of the satellite short message service and that is stored in the electronic device. When the electronic device is connected to a communication network, the electronic device sends the first value to a server. The electronic device receives a first calibration result sent by the server, where the first calibration result indicates whether the first value is consistent with a second value, and the second value is a value of a remaining quota that is stored in the server. The electronic device calibrates the first parameter based on the first calibration result. According to the solution, the electronic device may perform the pre-fee-deduction operation to perform timely charging, and when the electronic device is connected to the communication network, the electronic device may report the first value to the server in a timely manner to calibrate the remaining quota. This further ensures accuracy of satellite short message communication charging.

## Description

### CROSS-REFERENCE TO RELATED APPLICATIONS

This application claims priorities to Chinese Patent Application No. 202210628039.2, filed with the China National Intellectual Property Administration on June 6, 2022 and entitled "BEIDOU SHORT MESSAGE COMMUNICATION-BASED CHARGING AND CALIBRATION METHOD, APPARATUS, AND SYSTEM", and to Chinese Patent Application No. 202211040684.9, filed with the China National Intellectual Property Administration on August 29, 2022 and entitled "METHOD FOR CALIBRATING SATELLITE SHORT MESSAGE COMMUNICATION CHARGING AND DEVICE", both of which are incorporated herein by reference in their entireties.

### TECHNICAL FIELD

This application relates to the field of satellite communication technologies, and in particular, to a method for calibrating satellite short message communication charging and a device.

### BACKGROUND

A BeiDou navigation satellite system (BeiDou navigation satellite system, BDS) is a global navigation satellite system, being implemented, independently developed and operated by China. BDS-based short message communication means bidirectional information transmission that can be performed between a BeiDou ground terminal, a BeiDou satellite, and a BeiDou ground monitoring station through satellite signals. A BeiDou short message is usually used as a basic transmission unit in BeiDou satellite communication. BeiDou short message communication is a functional characteristic of the BDS.

The BeiDou short message communication may provide a communication service in areas (such as uninhabited areas, deserts, oceans, and polar regions) that cannot be covered by a common mobile communication signal or in scenarios (such as earthquake, flood, and typhoon) in which a communication base station is damaged. An electronic device in which a BeiDou short message module is installed may perform emergency communication by sending a BeiDou short message. The electronic device may be located through the BeiDou short message communication, so that a user learns of where the user is. In addition, information may be sent to the outside through the BeiDou short message communication, to tell others what happened. Therefore, the BeiDou short message communication plays a significant role in fields such as national defense, people's livelihood, and emergency rescue, and is widely used in scenarios such as outdoors, fishery, and disaster rescue.

The BeiDou short message communication is mainly used in a scenario in which a communication status is poor. A satellite signal at a location of a user may be weak, and after sending a BeiDou short message, the electronic device may not be capable of receiving a sending result returned by the BeiDou satellite. Therefore, a problem of inaccurate fee deduction is likely to occur when the electronic device performs BeiDou short message communication charging.

### SUMMARY

This application provides a method for calibrating satellite short message communication charging and a device, to improve accuracy of satellite short message communication charging.

According to a first aspect, this application provides a method for calibrating satellite short message communication charging. The method may be performed by an electronic device. The method includes: An electronic device sends a target satellite short message to a satellite in response to a first operation. The electronic device performs a pre-fee-deduction operation for a satellite short message service, and updates a first parameter to a first value, where the first parameter is a remaining quota that is of the satellite short message service and that is stored in the electronic device. When the electronic device is connected to a communication network, the electronic device sends the first value to a server. The electronic device receives a first calibration result sent by the server, where the first calibration result indicates whether the first value is consistent with a second value, the second value is a value of a second parameter, and the second parameter is a remaining quota that is of the satellite short message service of the electronic device and that is stored in the server. The electronic device calibrates the first parameter based on the first calibration result.

In the foregoing method, after sending the target satellite short message to the satellite, the electronic device may perform the pre-fee-deduction operation without waiting for a sending result returned by the satellite. In this way, the electronic device may perform charging in a timely manner, to prevent a problem of incorrect fee deduction in a scenario in which the electronic device cannot receive the sending result. In addition, when the electronic device is connected to the communication network, the electronic device may report the first value to the server in a timely manner to calibrate the remaining quota. This further ensures accuracy of satellite short message communication charging.

In a possible design, after the sending a target satellite short message to a satellite, the method further includes: storing a sending record of the target satellite short message.

According to the design, the electronic device may store a sending record of sending a satellite short message for subsequent use in performing remaining quota calibration.

In a possible design, after the performing a pre-fee-deduction operation for a satellite short message service, and updating a first parameter to a first value, the method further includes: receiving a first sending result sent by the satellite, where the first sending result indicates that the target satellite short message fails to be sent; and canceling the pre-fee-deduction operation, and updating the first parameter again based on a preset value, where the preset value is a quota corresponding to sending one satellite short message by the electronic device.

According to the design, after receiving the first sending result sent by the satellite, the electronic device may adjust the first parameter in a timely manner based on the first sending result, thereby ensuring the accuracy of satellite short message communication charging.

In a possible design, the calibrating the first parameter based on the first calibration result includes: when the first calibration result indicates that the first value is consistent with the second value, determining that the first parameter is accurate; and storing a time at which the first calibration result is received as a target time, or updating a target time stored in the electronic device to a time at which the first calibration result is received, where the target time is a time at which the first parameter is consistent with the second parameter.

According to the design, when the first calibration result indicates that the first value is consistent with the second value, it indicates that the first value is accurate. In this case, the electronic device may update the target time stored in the electronic device to the time at which the first calibration result is received. In this way, when performing quota calibration next time, the electronic device may check a charging operation performed after the target time, to improve quota calibration efficiency.

In a possible design, the calibrating the first parameter based on the first calibration result includes: when the first calibration result indicates that the first value is inconsistent with the second value, obtaining a message sending record that is between a target time and a current time and that is stored in the electronic device, where the target time is a time at which the first parameter is consistent with the second parameter; sending the message sending record to the server; receiving a second calibration result sent by the server, where the second calibration result is a remaining quota calibration result that is of the satellite short message service of the electronic device and that is determined by the server based on the message sending record and a message receiving record that is stored in the server; and calibrating the first parameter based on the second calibration result.

According to the design, when the first calibration result indicates that the first value is inconsistent with the second value, the electronic device may send the message sending record to the server, so that the server determines the remaining quota of the satellite short message service of the electronic device based on the message sending record stored in the electronic device and the message receiving record stored in the server, thereby ensuring accuracy of calibrating satellite short message communication charging.

In a possible design, the calibrating the first parameter based on the second calibration result includes: when the second calibration result includes a calibrated remaining quota of the satellite short message service of the electronic device, updating the first parameter based on the second calibration result, and updating the target time to a time at which the second calibration result is received.

According to the design, the electronic device may update the first parameter based on the calibrated remaining quota of the satellite short message service of the electronic device, thereby ensuring that the first parameter is accurate.

In a possible design, the calibrating the first parameter based on the second calibration result includes: displaying a first prompt message when the second calibration result indicates that the server cannot perform automatic calibration, where the first prompt message is used to prompt a user to apply for manual calibration for the remaining quota of the satellite short message service of the electronic device; sending a request message to the server in response to a second operation, where the request message is used to request the server to allocate manual calibration for the remaining quota of the satellite short message service of the electronic device; receiving a manual calibration result returned by the server, where the manual calibration result includes a calibrated remaining quota of the satellite short message service of the electronic device; and updating the first parameter based on the manual calibration result, and updating the target time to a time at which the second calibration result is received.

According to the design, due to particularity of satellite communication, the server may not complete remaining quota calibration based on the message sending record and the message receiving record. In this case, the second calibration result may indicate that the server cannot perform automatic calibration. The electronic device may remind the user to trigger a request message for manual calibration, and obtain a manual calibration result. This prevents a problem of incorrect deduction caused by an automatic calibration abnormality.

In a possible design, the method further includes: displaying a second prompt message when the first parameter is less than a preset threshold, where the second prompt message indicates a current remaining quota of the satellite short message service to the user.

According to the design, a user may be prevented from sending satellite messages above a quota, and a waste of satellite resources may be avoided.

According to a second aspect, this application provides a method for calibrating satellite short message communication charging. The method may be performed by a server. The method includes: receiving a first value sent by an electronic device, where the first value is a value of a first parameter, and the first parameter is a remaining quota that is of a satellite short message service of the electronic device and that is stored in the electronic device; determining a first calibration result based on the first value and a second value, where the first calibration result indicates whether the first value is consistent with the second value, the second value is a value of a second parameter, and the second parameter is a remaining quota that is of the satellite short message service of the electronic device and that is stored in the server; and sending the first calibration result to the electronic device.

In the foregoing method, the server may determine the first calibration result based on the first value and the second value stored in the server, and send the first calibration result to the electronic device, so that the remaining quota of the satellite short message service of the electronic device is calibrated, and accuracy of satellite short message communication charging is ensured.

In a possible design, the method further includes: receiving a target satellite short message sent by a satellite, where the target satellite short message is sent by the electronic device to the satellite; and updating the second parameter based on a preset value, where the preset value is a quota corresponding to sending one satellite short message by the electronic device.

According to the design, the server may store a remaining quota (the second parameter) corresponding to the satellite short message service of the electronic device, and update the second parameter in real time based on a status of receiving a satellite short message by the server, so that the server calibrates the remaining quota corresponding to the satellite short message service of the electronic device.

In a possible design, after the sending the first calibration result to the electronic device, the method further includes: receiving a message sending record sent by the electronic device, where the message sending record is a message sending record that is between a target time and a current time and that is stored in the electronic device, and the target time is a time at which the first parameter is consistent with the second parameter; obtaining a message receiving record between the target time and the current time; and determining a second calibration result based on the message sending record and the message receiving record, and sending the second calibration result to the electronic device.

In a possible design, the determining a second calibration result based on the message sending record and the message receiving record includes: determining a calibrated remaining quota of the satellite short message service of the electronic device based on the message sending record and the message receiving record; and using the calibrated remaining quota of the satellite short message service of the electronic device as the second calibration result.

According to the design, when the first calibration result indicates that the first value is inconsistent with the second value, the electronic device may send the message sending record to the server, and the server may determine the remaining quota of the satellite short message service of the electronic device based on the message sending record and the message receiving record, thereby ensuring accuracy of calibrating satellite short message communication charging.

In a possible design, after the sending the second calibration result to the electronic device, the method further includes: receiving a request message sent by the electronic device, where the request message is used to request the server to allocate manual calibration for the remaining quota of the satellite short message service of the electronic device; obtaining a manual calibration result, where the manual calibration result includes a calibrated remaining quota of the satellite short message service of the electronic device; and sending the manual calibration result to the electronic device.

According to the design, due to particularity of satellite communication, the server may not complete remaining quota calibration based on the message sending record and the message receiving record. In this case, the second calibration result may indicate that the server cannot perform automatic calibration. The server may allocate, based on the request message sent by the electronic device, the manual calibration for the remaining quota of the satellite short message service of the electronic device, and obtain the manual calibration result. This prevents a problem of incorrect deduction caused by an automatic calibration abnormality.

According to a third aspect, this application provides an electronic device. The electronic device includes a plurality of functional modules. The plurality of functional modules interact with each other, to implement the method in the first aspect and the implementations of the first aspect. The plurality of functional modules may be implemented based on software, hardware, or a combination of software and hardware, and the plurality of functional modules may be randomly combined or divided based on specific implementation.

According to a fourth aspect, this application provides an electronic device, including at least one processor and at least one memory. The at least one memory stores computer program instructions. When the electronic device runs, the at least one processor performs the method in the first aspect and the implementations of the first aspect.

According to a fifth aspect, this application provides a server. The server includes a plurality of functional modules. The plurality of functional modules interact with each other, to implement the method in the second aspect and the implementations of the second aspect. The plurality of functional modules may be implemented based on software, hardware, or a combination of software and hardware, and the plurality of functional modules may be randomly combined or divided based on specific implementation.

According to a sixth aspect, this application provides a server, including at least one processor and at least one memory. The at least one memory stores computer program instructions. When the server runs, the at least one processor performs the method in the second aspect and the implementations of the second aspect.

According to a seventh aspect, this application further provides a computer program. When the computer program is run on a computer, the computer is enabled to perform the method in any one of the foregoing aspects and the implementations of the foregoing aspects.

According to an eighth aspect, this application further provides a computer-readable storage medium. The computer-readable storage medium stores a computer program. When the computer program is executed by a computer, the computer is enabled to perform the method in any one of the foregoing aspects and the implementations of the foregoing aspects.

According to a ninth aspect, this application further provides a chip. The chip is configured to read a computer program stored in a memory, to perform the method in any one of the foregoing aspects and the implementations of the foregoing aspects.

According to a tenth aspect, this application further provides a chip system. The chip system includes a processor, configured to support a computer apparatus in implementing the method in any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a diagram of an architecture of a satellite short message communication system according to an embodiment of this application;
FIG. 2 is a diagram of a structure of an electronic device according to an embodiment of this application;
FIG. 3 is a block diagram of a software structure of an electronic device according to an embodiment of this application;
FIG. 4A and FIG. 4B are a flowchart of a method for satellite short message communication charging according to an embodiment of this application;
FIG. 5 is a diagram of a satellite communication application interface according to an embodiment of this application;
FIG. 6 is a diagram of an application interface for displaying a first prompt message according to an embodiment of this application;
FIG. 7 is a diagram of a satellite communication application interface according to an embodiment of this application;
FIG. 8 is a diagram of an interface for querying a remaining quota according to an embodiment of this application;
FIG. 9 is a diagram of an application interface for displaying a second prompt message according to an embodiment of this application;
FIG. 10 is a diagram of an application interface for displaying a third prompt message according to an embodiment of this application; and
FIG. 11 is a flowchart for calibrating satellite short message communication charging according to an embodiment of this application.

### DESCRIPTION OF EMBODIMENTS

To make objectives, technical solution, and advantages of embodiments of this application clearer, the following further describes embodiments of this application in detail with reference to accompanying drawings. The terms "first" and "second" below in descriptions of embodiments of this application are only used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

A BeiDou navigation satellite system (BeiDou navigation satellite system, BDS) is a global navigation satellite system, being implemented, independently developed and operated by China. BDS-based short message communication means bidirectional information transmission that can be performed between a BeiDou ground terminal, a BeiDou satellite, and a BeiDou ground information processing center through satellite signals. A BeiDou short message is usually used as a basic transmission unit in BeiDou satellite communication. BeiDou short message communication is a functional characteristic of the BDS. The BeiDou short message communication may provide a communication service in areas (such as uninhabited areas, deserts, oceans, and polar regions) that cannot be covered by a common mobile communication signal or in scenarios (such as earthquake, flood, and typhoon) in which a communication base station is damaged.

An electronic device in which a BDS module is installed may be used as the BeiDou ground terminal. The electronic device may perform emergency communication by sending a BeiDou short message to the BeiDou satellite. The electronic device may be located through the BeiDou short message communication, so that a user learns of where the user is. In addition, information may be sent to the outside through the BeiDou short message communication, to tell others what happened. Therefore, the BeiDou short message communication plays a significant role in fields such as national defense, people's livelihood, and emergency rescue, and is widely used in scenarios such as outdoors, fishery, and disaster rescue.

In a method for target BeiDou short message charging, after the electronic device sends a BeiDou short message to the BeiDou satellite, the BeiDou satellite returns a sending result to the electronic device. The sending result may be a sending success or a sending failure. The electronic device performs fee deduction when determining, based on the received sending result, that the BeiDou short message is successfully sent. However, the BeiDou short message communication is mainly used in a scenario in which a communication status is poor, a satellite signal at a location of the user may be weak, and after sending the BeiDou short message, the electronic device may not be capable of receiving the sending result returned by the BeiDou satellite. Therefore, a problem of inaccurate fee deduction is likely to occur when the electronic device performs BeiDou short message communication charging.

In an implementation, when the electronic device sends an SMS message for communication, an operator system may charge for the SMS message. The user sends an SMS message by using a mobile terminal like a mobile phone. Data is recorded when passing through devices such as a switch and a base station, and a charging bill is generated. The operator system summarizes bill information for calculation, and finally generates data in a user bill. However, the implementation can only be applied in a traditional operator network and architecture, highly depends on the network and an operator infrastructure, and is not applicable to charging in the BeiDou short message communication.

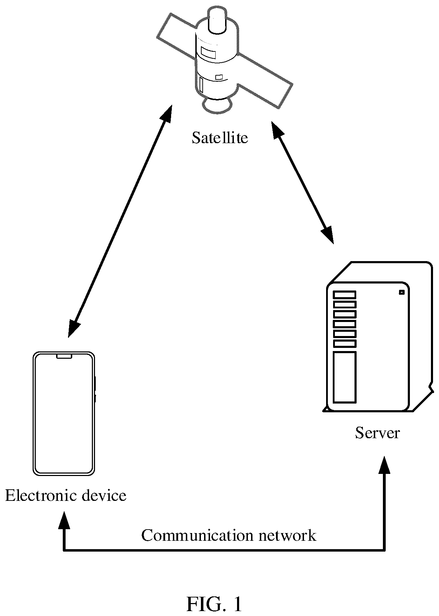

Based on the foregoing problem, embodiments of this application provide a method for satellite short message communication charging, a system, and a device. FIG. 1 is a diagram of an architecture of a satellite short message communication system according to an embodiment of this application. Refer to FIG. 1. The satellite short message communication system provided in this embodiment of this application includes an electronic device, a server, and a satellite. The server may be a cloud server provided by an electronic device vendor. A satellite communication module is installed in the electronic device. When a communication network is available, the electronic device may communicate with the server through the communication network (for example, a wireless local area network or a mobile communication network). When a communication network is unavailable, the electronic device may communicate with the satellite, and the satellite may forward, to the server, a satellite short message sent by the electronic device, so that the electronic device communicates with the server by using the satellite.

In embodiments of this application, the satellite may be a BeiDou satellite, the satellite communication module installed in the electronic device may be a BDS module, and the satellite short message communication system may be a BeiDou short message communication system. It may be understood that the BeiDou satellite is only used as an example rather than a limitation. In specific implementation, the method for satellite short message communication charging provided in embodiments of this application may be further applied to other satellite short message communication. This is not limited in this application.

In the method for satellite short message communication charging provided in embodiments of this application, a user may trigger a first operation on the electronic device, and the electronic device sends a target satellite short message to the satellite in response to the first operation. After determining that the target satellite short message has been sent, the electronic device performs a pre-fee-deduction operation for a satellite short message service, and updates a first parameter to a first value. The first parameter is a remaining quota that is of the satellite short message service and that is stored in the electronic device. When the electronic device is connected to the communication network, the electronic device may send the first value to the server. The server may determine a first calibration result based on the first value and a second value. The first calibration result indicates whether the first value is consistent with the second value. The second value is a value of a second parameter. The second parameter is a remaining quota that is of the satellite short message service of the electronic device and that is stored in the server. The server sends the first calibration result to the electronic device. The electronic device may calibrate the first parameter based on the first calibration result.

According to the method for satellite short message communication charging provided in embodiments of this application, after sending the target satellite short message to the satellite, the electronic device may perform the pre-fee-deduction operation without waiting for a sending result returned by the satellite. In this way, the electronic device may perform charging in a timely manner, to prevent a problem of incorrect fee deduction in a scenario in which the electronic device cannot receive the sending result. In addition, when the electronic device is connected to the communication network, the electronic device may report, to the server in a timely manner, a latest remaining quota that is of the satellite short message service and that is stored in the electronic device, to calibrate the remaining quota. This further ensures accuracy of satellite short message communication charging.

The following describes the electronic device, and embodiments in which the electronic device is used. The electronic device in embodiments of this application may be an electronic device in which the BDS module is installed. The electronic device may be a tablet computer, a mobile phone, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

In some embodiments of this application, the electronic device may alternatively be a portable terminal device that further includes other functions such as a personal digital assistant function and/or a music player function. An example embodiment of the portable terminal device includes but is not limited to a portable terminal device on which iOS^{®}, Android^{®}, Microsoft^{®}, Harmony^{®}, or another operating system is installed. The portable terminal device may alternatively be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

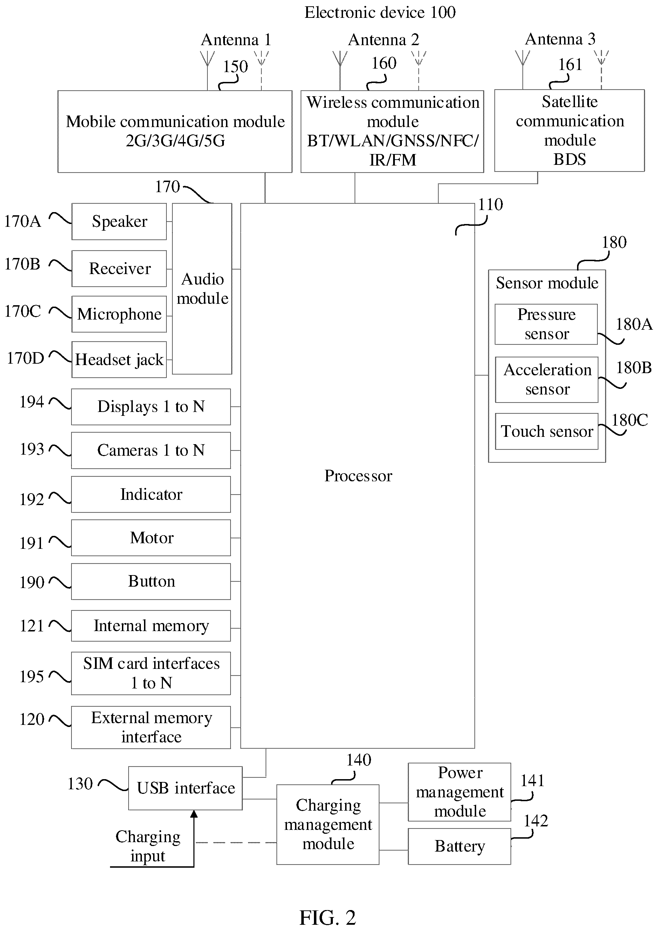

FIG. 2 is a diagram of a structure of an electronic device 100 according to an embodiment of this application. As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, a satellite communication module 161, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution. A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this manner, the processor 110 may be prevented from repeatedly accessing instructions or data, waiting time of the processor 110 is reduced, and system efficiency is improved.

The USB interface 130 is an interface that conforms to the USB standard specification, and may be specifically a mini USB interface, a micro USB interface, a USB Type-C interface, or the like. The USB interface 130 may be configured to be connected to the charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to receive and transmit an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The satellite communication module 161 may provide a satellite short message communication capability for the electronic device 100. The electronic device 100 may send a short message to a satellite by using the satellite communication module 161, and receive a short message sent by the satellite to the electronic device, to implement communication between the electronic device 100 and the satellite. For example, the satellite communication module 161 may be a BDS module.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to a DSP for processing. The DSP converts the digital image signal into a standard image signal of a format such as RGB or YUV. In some embodiments, the electronic device 100 may include one or N cameras 193, where N is a positive integer greater than 1.

The internal memory 121 may be configured to store computer-executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, and may further include a nonvolatile memory, for example, at least one magnetic disk storage device, a flash storage device, and a universal flash storage (universal flash storage, UFS).

The external memory interface 120 may be configured to connect to an external memory card, such as a micro SD card, to extend a storage capability of the electronic device. The external memory card communicates with the processor 110 through the external memory interface 120, to implement a data storage function. For example, files such as pictures or videos are stored in the external memory card.

The electronic device 100 may implement an audio function such as music playing or recording by using the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal and may convert the pressure signal into an electrical signal. In some embodiments, the pressure sensor 180A may be disposed on the display 194.

The touch sensor 180C is also referred to as a "touch panel". The touch sensor 180C may be disposed on the display 194. The touch sensor 180C and the display 194 constitute a touchscreen, which is also referred to as a "touch screen". The touch sensor 180C is configured to detect a touch operation performed on or near the touch sensor 180C. The touch sensor may transfer the detected touch operation to the application processor to determine a type of the touch event. A visual output related to the touch operation may be provided on the display 194. In some other embodiments, the touch sensor 180C may alternatively be disposed on a surface of the electronic device 100, and is at a location different from that of the display 194.

The button 190 includes a power on/off button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. Touch vibration feedback effect may be customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 2 do not constitute a specific limitation on the electronic device 100. The electronic device may further include more or fewer components than those shown in the figure, or some components may be combined or split, or there may be a different component arrangement. In addition, a combination/connection relationship between the components in FIG. 2 may also be adjusted and modified.

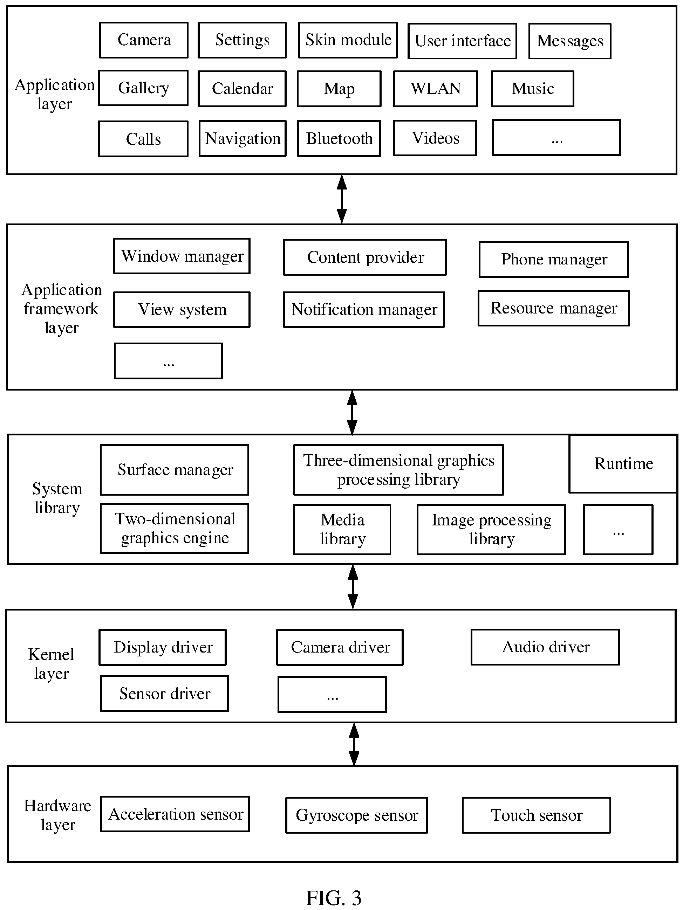

FIG. 3 is a block diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 3, the application layer may include Camera, Settings, a skin module, a user interface (user interface, UI), a third-party application, and the like. Third-party applications may include Gallery, Calendar, Calls, Map, Navigation, WLAN, Bluetooth, Music, Videos, Messages, and the like. In embodiments of this application, the application layer may include a target installation package that is of a target application and that the electronic device requests to download from a server. A function file and a layout file in the target installation package are adapted to the electronic device.

The application framework layer provides an application programming interface (application programming interface, API) and a programming framework for an application in the application layer. The application framework layer may include some predefined functions. As shown in FIG. 3, the application framework layer may include a window manager, a content provider, a view system, a phone manager, a resource manager, and a notification manager.

The window manager is configured to manage a window program. The window manager may obtain a display size, determine whether there is a status bar, lock a screen, take a screenshot, and the like. The content provider is configured to store and obtain data, and enable these data to be accessible to an application. The data may include a video, an image, audio, calls that are made and received, a browsing history and a browsing bookmark, an address book, and the like.

The view system includes visual controls, such as a control for displaying text, a control for displaying pictures, and the like. The view system may be configured to build an application. A display interface may be formed by one or more views. For example, a display interface including an SMS message notification icon may include a view for displaying a text and a view for displaying a picture.

The phone manager is configured to provide a communication function of the electronic device, for example, management of a call status (including answering, declining, or the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively provide, on a status bar at the top of the system, a notification in a form of a chart or scroll bar text, for example, a notification of an application running in the background, or provide, on a screen, a notification in a form of a dialog window. For example, text information is displayed in the status bar, a prompt tone is played, the electronic device vibrates, or the indicator light blinks.

A runtime includes a core library and a virtual machine. The runtime schedules and manages an operating system.

The kernel library includes two parts: a function that needs to be called in a Java language, and a kernel library of the operating system. The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is used to manage a display subsystem and provide fusion of 2D and 3D layers for a plurality of applications.

The media library supports play and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A hardware layer may include various sensors, for example, an acceleration sensor, a gyroscope sensor, and a touch sensor.

It should be noted that the structures shown in FIG. 2 and FIG. 3 are only used as examples of the electronic device provided in embodiments of this application, and cannot impose any limitation on the electronic device provided in embodiments of this application. In specific implementation, the electronic device may have more or fewer devices or modules than those in the structure shown in FIG. 2 or FIG. 3.

The following describes the method for satellite short message communication charging provided in embodiments of this application.

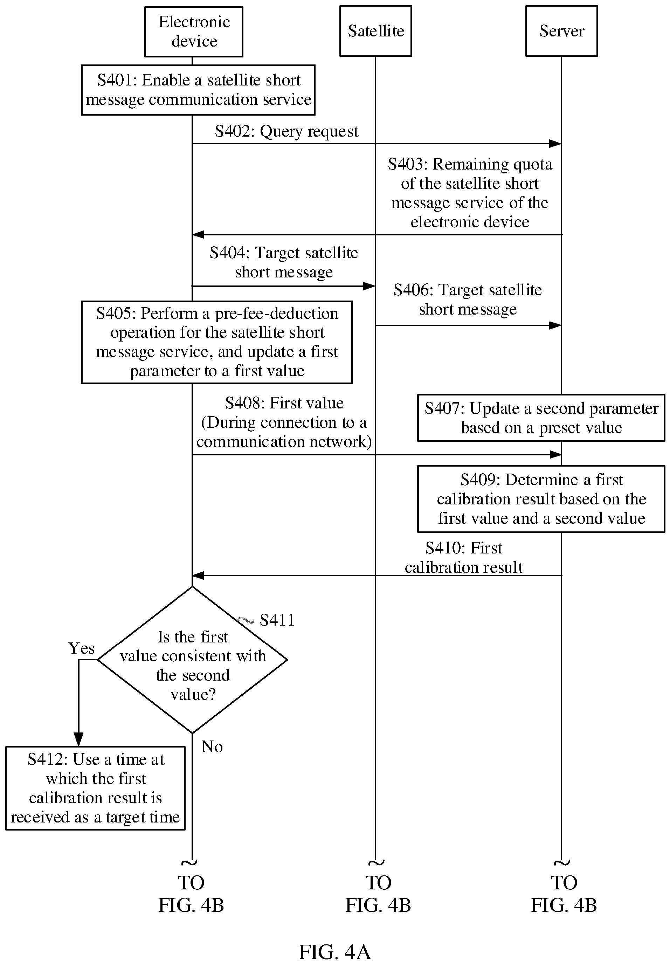

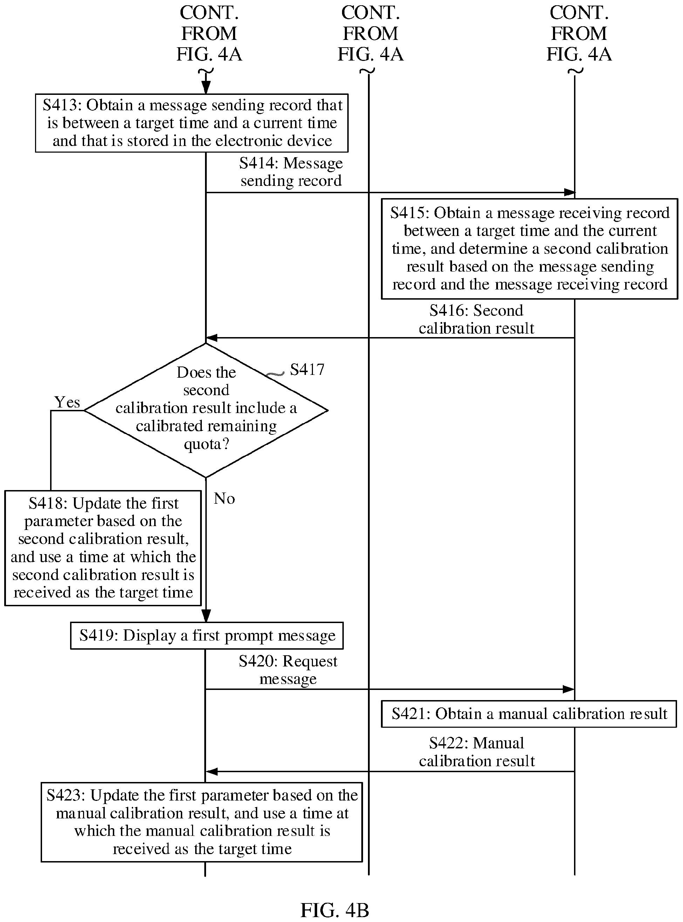

FIG. 4A and FIG. 4B are a flowchart of a method for satellite short message communication charging according to an embodiment of this application. The method may be implemented by the electronic device, the server, and the satellite in the satellite short message communication system shown in FIG. 1. Refer to FIG. 4A and FIG. 4B. The method includes the following steps.

S401: The electronic device enables a satellite short message service.

In embodiments of this application, the electronic device may have a satellite communication module, for example, the satellite communication module 161 in the structure of the electronic device shown in FIG. 2.

Optionally, a satellite communication application may be installed in the electronic device. The satellite communication application supports communication performed in a satellite short message manner. A user may choose to enable the satellite short message communication service in the satellite communication application of the electronic device. After the electronic device enables the satellite short message service, when the electronic device cannot be connected to a communication network (for example, a wireless local area network or a mobile communication network), the electronic device may perform communication by sending a satellite short message to the satellite.

In addition, in embodiments of this application, the user may alternatively enable the satellite short message service through a system setting interface. A manner of triggering enabling of the satellite short message service is not limited in this application.

S402: The electronic device sends a query request to the server.

Optionally, the query request may be used to request the server to query a remaining quota of the satellite short message service of the electronic device. The remaining quota of the satellite short message service is a quota that can be used by the electronic device to send the satellite short message. For example, it is assumed that the satellite short message is charged for by quantity. If the remaining quota corresponding to the satellite short message service of the electronic device is 10, it indicates that the electronic device may further send 10 satellite short messages.

S403: The server sends the remaining quota of the satellite short message service of the electronic device to the electronic device.

It should be noted that the electronic device may send the query request to the server after the satellite communication application is installed and started for the first time, or may send the query request to the server after a version of the satellite communication application is upgraded and the satellite communication application is started for the first time.

In embodiments of this application, after receiving the remaining quota that is of the satellite short message service and that is sent by the server, the electronic device may store the remaining quota of the satellite short message service as a first parameter. In this way, the electronic device may locally maintain a remaining quota of the satellite short message service, so that the electronic device records a fee deduction status of the satellite short message service.

S404: The electronic device sends a target satellite short message to the satellite in response to a first operation.

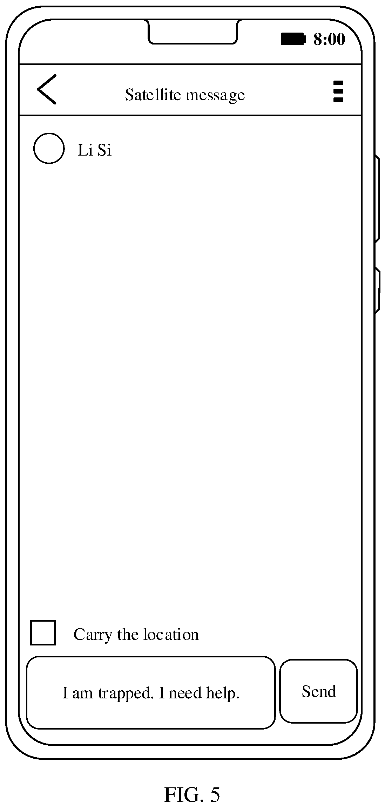

Optionally, the first operation may be a tap operation performed on a send control in a satellite communication application interface. For example, FIG. 5 is a diagram of a satellite communication application interface according to an embodiment of this application. Refer to FIG. 5. The user may input to-be-sent content in an input box in the satellite communication application interface. The user may further tick a selection box of "Carry the location", to carry the current geographical location of the electronic device in the target satellite short message. The user taps the send control, to trigger the electronic device to send the target satellite short message to the satellite.

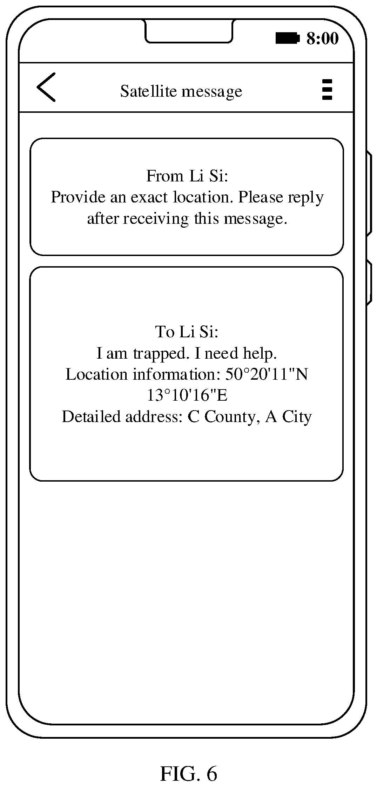

In some implementations of this application, the electronic device may display, in the satellite communication application, a message, sending of which is triggered by the user, and the user may view the message at any time. FIG. 6 is a diagram of a satellite communication application interface according to an embodiment of this application. Refer to FIG. 6. The electronic device displays, in the application interface, content of a satellite short message, sending of which is triggered by the user, and the user may view the content of the sent satellite short message at any time. As shown in FIG. 6, the user may view, in the interface, a satellite short message sent to "Li Si", or may view a satellite short message received from "Li Si".

S405: The electronic device performs a pre-fee-deduction operation for the satellite short message service, and updates the first parameter to a first value.

The first parameter is a remaining quota that is of the satellite short message service and that is stored in the electronic device.

In embodiments of this application, an environment in which the electronic device performs communication in a satellite short message communication manner may be complex, for example, the electronic device cannot be connected to the communication network like the wireless local area network or the mobile communication network in the environment, and after the electronic device sends the target satellite short message to the satellite, if a satellite signal is weak, the electronic device may not be capable of receiving a sending result that corresponds to the target satellite short message and that is returned by the satellite. Therefore, in embodiments of this application, after determining that the target satellite short message has been sent, the electronic device performs the pre-fee-deduction operation, and updates the first parameter to the first value. Optionally, the electronic device may determine, based on a sending result of a protocol layer of the satellite communication application, whether the target satellite short message has been sent.

For example, it is assumed that the first parameter obtained before the electronic device sends the target satellite short message is 10. After determining that the target satellite short message has been sent and the first value is 9, the electronic device updates the first parameter to 9. According to the implementation, the electronic device may perform satellite short message communication charging in a timely manner, to prevent a problem of incorrect fee deduction in a scenario in which the electronic device cannot receive the sending result.

Optionally, after sending the target satellite short message to the satellite, the electronic device may locally store a sending record of the target satellite short message for subsequent use in performing remaining quota calibration.

In a possible scenario, after performing the pre-fee-deduction operation and updating the first parameter to the first value, the electronic device receives a first sending result sent by the satellite. The first sending result indicates whether the target satellite short message is successfully sent. If the first sending result indicates that the target satellite short message is successfully sent, the electronic device may determine that the pre-fee-deduction operation is accurate, and the first parameter does not need to be adjusted. If the first sending result indicates that the target satellite short message fails to be sent, the electronic device may cancel the pre-fee-deduction operation, and update the first parameter based on a preset value. The preset value is a quota corresponding to sending one satellite short message by the electronic device. For example, it is assumed that the first parameter is 9, and the preset value is 1. After canceling the pre-fee-deduction operation, the electronic device may update the first parameter to 10. According to the implementation, after receiving the first sending result sent by the satellite, the electronic device may adjust the first parameter in a timely manner based on the first sending result, thereby ensuring accuracy of satellite short message communication charging.

S406: The satellite sends the target satellite short message to the server.

S407: The server updates a second parameter based on the preset value.

The second parameter is a remaining quota that is of the satellite short message service of the electronic device and that is stored in the server.

In embodiments of this application, when the electronic device cannot be connected to the communication network, the electronic device communicates with the server by using the satellite. In this case, the electronic device and the server may separately store a remaining quota corresponding to the satellite short message service of the electronic device. For example, the electronic device may store the first parameter, and the server may include the second parameter. As described in S405, the electronic device may update the first parameter to the first value after determining that the target satellite short message has been sent; and the server may update the second parameter based on the preset value after receiving the target satellite short message sent by the satellite. For example, it is assumed that the second parameter stored in the server is 10, and the preset value is 1. After the server receives the target satellite short message, the server may update the second parameter to 9. According to the implementation, even when a network is unavailable, the electronic device and the server may separately store a remaining quota of the satellite short message service of the electronic device for subsequent calibration, thereby ensuring the accuracy of satellite short message communication charging.

Optionally, the server may store a receiving record of the target satellite short message in the server for subsequent use in performing quota calibration.

S408: When the electronic device is connected to the communication network, the electronic device sends the first value to the server.

In an optional implementation, when the electronic device is connected to the communication network, for example, the electronic device is connected to the wireless local area network or the mobile communication network, the first value may be sent to the server, to calibrate the remaining quota of the satellite short message service of the electronic device.

S409: The server determines a first calibration result based on the first value and a second value.

The second value is a value of the second parameter.

In an optional implementation, the server may determine whether the first value is consistent with the second value, to determine the first calibration result. The first calibration result may indicate that the first value is consistent with or inconsistent with the second value.

S410: The server sends the first calibration result to the electronic device.

S411: The electronic device determines, based on the first calibration result, whether the first value is consistent with the second value. If the first value is consistent with the second value, S412 is performed. If the first value is inconsistent with the second value, S413 is performed.

S412: The electronic device uses a time at which the first calibration result is received as a target time.

When the first calibration result indicates that the first value is consistent with the second value, the electronic device may determine that the first parameter is accurate, and the electronic device does not need to adjust the first parameter. In this case, the electronic device may use the time at which the first calibration result is received as the target time. The target time is a time at which the electronic device last determines that the first parameter is consistent with the second parameter. Each time the electronic device determines that the first parameter is consistent with the second parameter, the electronic device may update the target time once, so that when performing quota calibration next time, the electronic device may check a charging operation performed after the target time, to improve quota calibration efficiency. Optionally, the electronic device may mark a message sending record that is obtained before a target time stored in the electronic device as a reconciliation-completed state.

S413: The electronic device obtains a message sending record that is between the target time and a current time and that is stored in the electronic device.

When the first calibration result indicates that the first value is inconsistent with the second value, it indicates that the first parameter has an error or the second parameter has an error. The electronic device may obtain the target time. The target time is a time stored after the electronic device completes remaining quota calibration last time. The electronic device may obtain the message sending record between the target time and the current time. The message sending record in the time period is in a reconciliation-unperformed state, and the electronic device may send the message sending record in the time period to the server, so that the server calibrates the remaining quota based on the message sending record.

S414: The electronic device sends the message sending record to the server.

S415: The server obtains a message receiving record between a target time and the current time, and determines a second calibration result based on the message sending record and the message receiving record.

In an optional implementation, each time the server receives a message sent by the satellite, the server may store a message receiving record. After receiving the message sending record sent by the electronic device, the server may obtain a message receiving record that is between a target time and the current time and that is stored in the server, and the server may check the message sending record with the message receiving record, to determine the second calibration result. The second calibration result may include a calibrated remaining quota of the satellite short message service of the electronic device. It should be noted that, due to particularity of satellite communication, the server may not complete remaining quota calibration based on the message sending record and the message receiving record. In this case, the second calibration result may indicate that the server cannot perform automatic calibration.

S416: The server sends the second calibration result to the electronic device.

S417: The electronic device determines whether the second calibration result includes the calibrated remaining quota corresponding to the satellite short message service of the electronic device. If the second calibration result includes the calibrated remaining quota corresponding to the satellite short message service of the electronic device, S418 is performed. If the second calibration result does not include the calibrated remaining quota corresponding to the satellite short message service of the electronic device, S419 is performed.

S418: The electronic device updates the first parameter based on the second calibration result, and uses a time at which the second calibration result is received as the target time.

When the second calibration result includes the calibrated remaining quota of the satellite short message service of the electronic device, the electronic device may update the first parameter based on the second calibration result, for example, update the first parameter to a value of the calibrated remaining quota in the second calibration result. The electronic device may further use the time at which the second calibration result is received as the target time, and mark a message sending record obtained before the time at which the second calibration result is received as the reconciliation-completed state.

S419: The electronic device displays a first prompt message.

When the second calibration result indicates that the server cannot perform automatic calibration, the electronic device may display the first prompt message in the satellite communication application. The first prompt message is used to prompt the user to apply for manual calibration for the remaining quota of the satellite short message service.

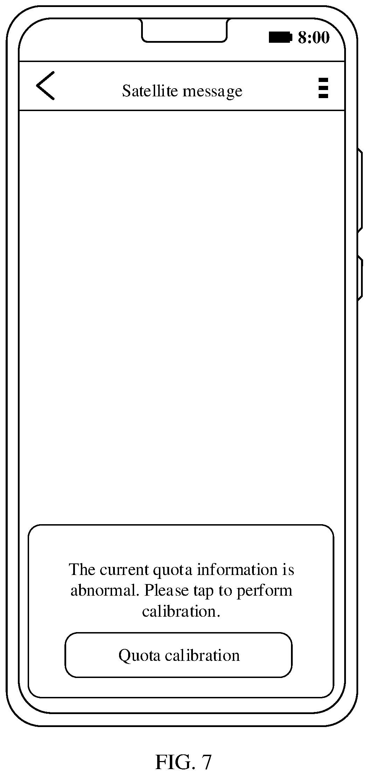

For example, FIG. 7 is a diagram of an application interface for displaying a first prompt message according to an embodiment of this application. Refer to FIG. 7. The electronic device may display the first prompt message in the satellite communication application interface. As shown in FIG. 7, the first prompt message is "The current quota information is abnormal. Please tap to perform calibration".

S420: The electronic device sends a request message to the server in response to a second operation.

For example, the second operation triggered by the user may be an operation performed on a quota calibration control in the satellite communication application interface. Refer to FIG. 5. The second operation may be that the user taps a "Quota calibration" control.

The electronic device sends the request information to the server in response to the second operation. The request message is used to request the server to allocate manual calibration.

S421: The server obtains a manual calibration result.

After receiving the request message sent by the electronic device, the server may allocate the manual calibration, and obtain the manual calibration result.

S422: The server sends the manual calibration result to the electronic device.

S423: The electronic device updates the first parameter based on the manual calibration result, and uses a time at which the manual calibration result is received as the target time.

In an optional implementation, the electronic device may update the first parameter based on the manual calibration result, for example, update the first parameter to a value of the remaining quota of the satellite short message service of the electronic device in the manual calibration result. The electronic device may further use the time at which the manual calibration result is received as a target time, and mark a message sending record obtained before the time at which the manual calibration result is received as the reconciliation-completed state.

It should be noted that, in another implementation of embodiments of this application, S408 to S410 may alternatively be that the server sends the second value to the electronic device, and the electronic device determines whether the first value is consistent with the second value. Similarly, S413 to S417 may alternatively be that the electronic device sends the target time to the server, the server sends a message receiving record that is between a target time and a current time and that is stored in the server to the electronic device, and the electronic device determines a second calibration result based on the received message receiving record and a message sending record that is between the target time and the current time and that is stored in the electronic device. In specific implementation, the foregoing implementation may be flexibly combined with the implementation shown in FIG. 4A and FIG. 4B. This is not limited in this application.

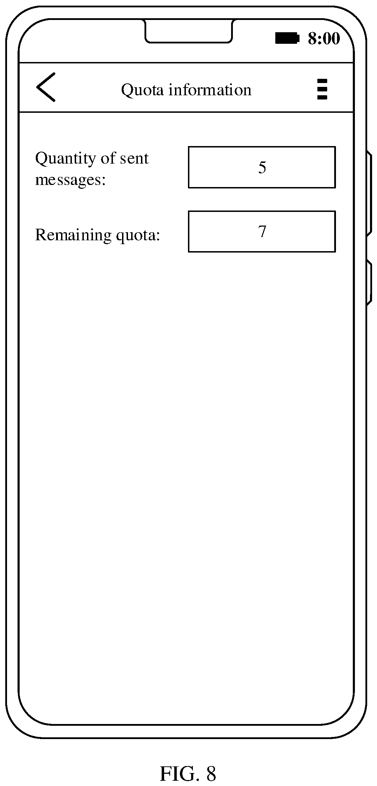

In some scenarios of this application, the electronic device further supports querying the remaining quota of the satellite short message service of the electronic device. FIG. 8 is a diagram of an interface for querying a remaining quota according to an embodiment of this application. Refer to FIG. 8. The electronic device may display, in the application interface, a quantity of satellite short messages that have been sent by the electronic device and a remaining quota.

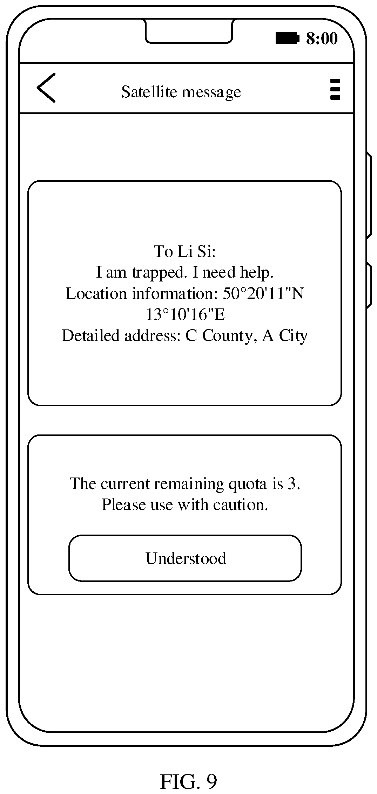

Optionally, when determining that the first parameter is less than a preset quota, the electronic device may further display a second prompt message. The second prompt message indicates a current remaining quota of the satellite short message service to the user. For example, FIG. 9 is a diagram of an application interface for displaying a second prompt message according to an embodiment of this application. Refer to FIG. 9. The electronic device may display the second prompt message in the satellite communication application interface. As shown in FIG. 9, the second prompt message is "The current remaining quota is 3. Please use with caution".

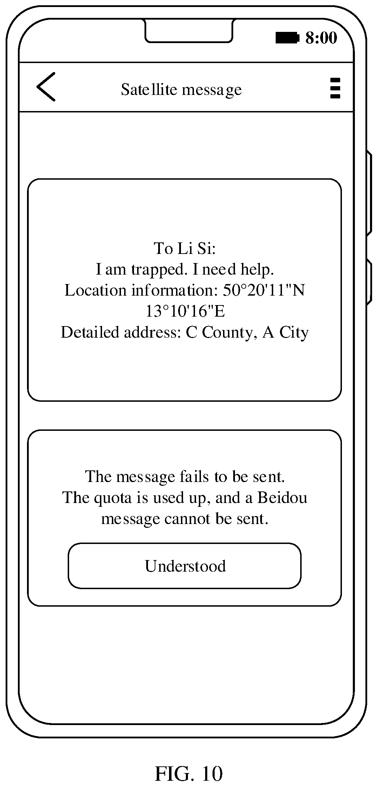

Optionally, when the first parameter is 0, the remaining quota of the satellite short message service is insufficient, and the electronic device cannot send a message. In this case, if the user triggers the first operation, the electronic device may further display a third prompt message. The third prompt message is used to inform the user that the message fails to be sent. FIG. 10 is a diagram of an application interface for displaying a third prompt message according to an embodiment of this application. Refer to FIG. 10. The electronic device may display the third prompt message in the satellite communication application interface. As shown in FIG. 10, the third prompt message is "The message fails to be sent. The quota is used up, and a satellite message cannot be sent". According to the implementation, the user may be prevented from sending satellite short messages above a quota, and a waste of satellite resources may be avoided.

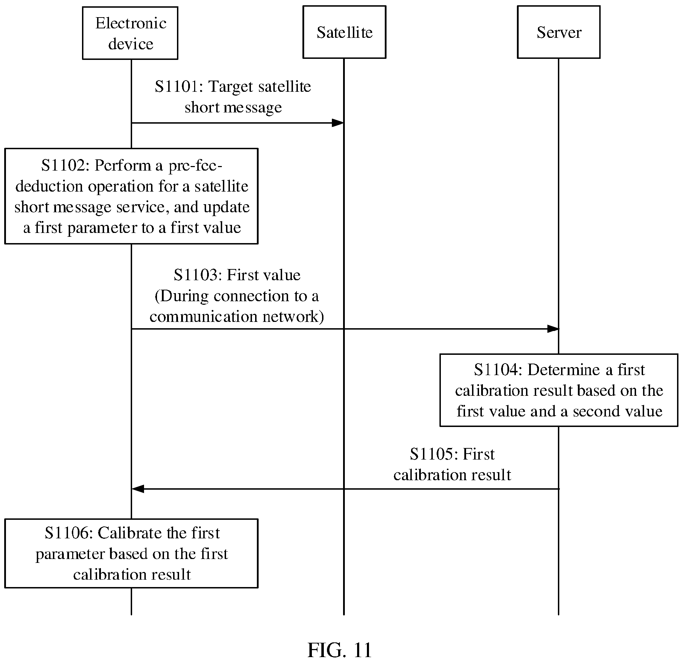

Based on the foregoing embodiments, this application further provides a method for calibrating satellite short message communication charging. The method may be performed by the electronic device, the satellite, and the server in the system shown in FIG. 1. FIG. 11 is a flowchart of a method for calibrating satellite short message communication charging according to an embodiment of this application. Refer to FIG. 11. The method includes the following steps.

51101: The electronic device sends a target satellite short message to the satellite in response to a first operation.

S1102: The electronic device performs a pre-fee-deduction operation for a satellite short message service, and updates a first parameter to a first value.

The first parameter is a remaining quota that is of the satellite short message service and that is stored in the electronic device.

S1103: When the electronic device is connected to a communication network, the electronic device sends the first value to the server.

S1104: The server determines a first calibration result based on the first value and a second value.

The first calibration result indicates whether the first value is consistent with the second value. The second value is a value of a second parameter. The second parameter is a remaining quota that is of the satellite short message service of the electronic device and that is stored in the server.

S1105: The server sends the first calibration result to the electronic device.

S 1106: The electronic device calibrates the first parameter based on the first calibration result.

In an optional implementation, after sending the target satellite short message in S1101, the electronic device stores a sending record of the target satellite short message.

In an optional implementation, after updating the first parameter to the first value in S1102, the electronic device receives a first sending result sent by the satellite, where the first sending result indicates that the target satellite short message fails to be sent. The electronic device cancels the pre-fee-deduction operation, and updates the first parameter again based on a preset value. The preset value is a quota corresponding to sending one satellite short message by the electronic device.

In an optional implementation, when the electronic device calibrates the first parameter based on the first calibration result in S1106, and the first calibration result indicates that the first value is consistent with the second value, the electronic device determines that the first parameter is accurate. A time at which the first calibration result is received is stored as a target time, or a target time stored in the electronic device is updated to the time at which the first calibration result is received. The target time is a time at which the electronic device last determines that the first parameter is consistent with the second parameter.

In another optional implementation, when the electronic device calibrates the first parameter based on the first calibration result in S 1106, and the first calibration result indicates that the first value is inconsistent with the second value, the electronic device obtains a message sending record that is between a target time and a current time and that is stored in the electronic device. The target time is a time at which the remaining quota that is of the satellite short message service and that is stored in the electronic device is consistent with the remaining quota that is of the satellite short message service of the electronic device and that is stored in the server. The electronic device sends the message sending record to the server. The electronic device receives a second calibration result sent by the server. The second calibration result is a remaining quota calibration result that is of the satellite short message service of the electronic device and that is determined by the server based on the message sending record and a message receiving record stored in the server. The electronic device calibrates the first parameter based on the second calibration result.

In an optional implementation, when the electronic device calibrates the first parameter based on the second calibration result, and the second calibration result includes a calibrated remaining quota of the satellite short message service of the electronic device, the electronic device updates the first parameter based on the second calibration result, and updates the target time to a time at which the second calibration result is received.

In an optional implementation, when the electronic device calibrates the first parameter based on the second calibration result, and the second calibration result indicates that the server cannot perform automatic calibration, the electronic device displays a first prompt message. The first prompt message is used to prompt a user to apply for manual calibration for the remaining quota of the satellite short message service of the electronic device. The electronic device sends a request message to the server in response to a second operation. The request message is used to request the server to allocate manual calibration for the remaining quota of the satellite short message service of the electronic device. The electronic device receives a manual calibration result returned by the server. The manual calibration result includes the calibrated remaining quota of the satellite short message service of the electronic device. The electronic device updates the first parameter based on the manual calibration result, and updates the target time to the time at which the second calibration result is received.

In an optional implementation, when the first parameter is less than a preset threshold, the electronic device displays a second prompt message. The second prompt message indicates a current remaining quota of the satellite short message service to the user.

It should be noted that, for specific implementation of the method for calibrating satellite short message communication charging shown in FIG. 11 in this application, refer to the foregoing embodiments of this application. Details are not described again.

Based on the foregoing embodiments, this application further provides an electronic device, including at least one processor and at least one memory. The at least one memory stores computer program instructions. When the electronic device runs, the at least one processor performs the method performed by the electronic device in the methods described in embodiments of this application. For example, S401 and S402, S404 and S405, S411 to S414, S417 to S420, and S423 that are performed by the electronic device in the embodiment shown in FIG. 4A and FIG. 4B are performed. For another example, S 1101 to S1103 and S 1106 that are performed by the electronic device in the embodiment shown in FIG. 11 are performed.

Based on the foregoing embodiments, this application further provides an electronic device. The electronic device includes a plurality of functional modules. The plurality of functional modules interact with each other, to implement functions performed by the electronic device in the methods described in embodiments of this application. For example, S401 and S402, S404 and S405, S411 to S414, S417 to S420, and S423 that are performed by the electronic device in the embodiment shown in FIG. 4A and FIG. 4B are performed. For another example, S 1101 to S 1103 and S 1106 that are performed by the electronic device in the embodiment shown in FIG. 11 are performed. The plurality of functional modules may be implemented based on software, hardware, or a combination of software and hardware, and the plurality of functional modules may be randomly combined or divided based on specific implementation.

Based on the foregoing embodiments, this application further provides a server. The server includes at least one processor and at least one memory. The at least one memory stores computer program instructions. When the server runs, the at least one processor performs functions performed by the server in the methods described in embodiments of this application. For example, S403, S407, S409 and S410, S415 and S416, and S421 and S422 that are performed by the server in the embodiment shown in FIG. 4A and FIG. 4B are performed. For another example, S 1104 and S1105 that are performed by the server in the embodiment shown in FIG. 11 are performed.

Based on the foregoing embodiments, this application further provides a server, including a plurality of functional modules. The plurality of functional modules interact with each other, to implement functions performed by the server in the methods described in embodiments of this application. For example, S403, S407, S409 and S410, S415 and S416, and S421 and S422 that are performed by the server in the embodiment shown in FIG. 4A and FIG. 4B are performed. For another example, S 1104 and S 1105 that are performed by the server in the embodiment shown in FIG. 11 are performed. The plurality of functional modules may be implemented based on software, hardware, or a combination of software and hardware, and the plurality of functional modules may be randomly combined or divided based on specific implementation.

Based on the foregoing embodiments, this application further provides a computer program. When the computer program is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the methods, the devices (systems), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A method for calibrating satellite short message communication charging, wherein the method is performed by an electronic device and comprises:
sending a target satellite short message to a satellite in response to a first operation;
performing a pre-fee-deduction operation for a satellite short message service, and updating a first parameter to a first value, wherein the first parameter is a remaining quota that is of the satellite short message service and that is stored in the electronic device;
when the electronic device is connected to a communication network, sending, by the electronic device, the first value to a server;
receiving a first calibration result sent by the server, wherein the first calibration result indicates whether the first value is consistent with a second value, the second value is a value of a second parameter, and the second parameter is a remaining quota that is of the satellite short message service of the electronic device and that is stored in the server; and
calibrating the first parameter based on the first calibration result.

2. The method according to claim 1, wherein after the sending a target satellite short message to a satellite, the method further comprises:
storing a sending record of the target satellite short message.

3. The method according to claim 1 or 2, wherein the calibrating the first parameter based on the first calibration result comprises:
when the first calibration result indicates that the first value is consistent with the second value, determining that the first parameter is accurate; and storing a time at which the first calibration result is received as a target time, or updating a target time stored in the electronic device to a time at which the first calibration result is received, wherein the target time is a time at which the first parameter is consistent with the second parameter.

4. The method according to claim 1 or 2, wherein the calibrating the first parameter based on the first calibration result comprises:
when the first calibration result indicates that the first value is inconsistent with the second value, obtaining a message sending record that is between a target time and a current time and that is stored in the electronic device, wherein the target time is a time at which the first parameter is consistent with the second parameter;
sending the message sending record to the server;
receiving a second calibration result sent by the server, wherein the second calibration result is a remaining quota calibration result that is of the satellite short message service of the electronic device and that is determined by the server based on the message sending record and a message receiving record that is stored in the server; and
calibrating the first parameter based on the second calibration result.

5. The method according to claim 4, wherein the calibrating the first parameter based on the second calibration result comprises:
when the second calibration result comprises a calibrated remaining quota of the satellite short message service of the electronic device, updating the first parameter based on the second calibration result, and updating the target time to a time at which the second calibration result is received.

6. The method according to claim 4, wherein the calibrating the first parameter based on the second calibration result comprises:
displaying a first prompt message when the second calibration result indicates that the server cannot perform automatic calibration, wherein the first prompt message is used to prompt a user to apply for manual calibration for the remaining quota of the satellite short message service of the electronic device;
sending a request message to the server in response to a second operation, wherein the request message is used to request the server to allocate manual calibration for the remaining quota of the satellite short message service of the electronic device;
receiving a manual calibration result returned by the server, wherein the manual calibration result comprises a calibrated remaining quota of the satellite short message service of the electronic device; and
updating the first parameter based on the manual calibration result, and updating the target time to a time at which the second calibration result is received.

7. The method according to any one of claims 1 to 6, wherein after the performing a pre-fee-deduction operation for a satellite short message service, and updating a first parameter to a first value, the method further comprises:
receiving a first sending result sent by the satellite, wherein the first sending result indicates that the target satellite short message fails to be sent; and
canceling the pre-fee-deduction operation, and updating the first parameter again based on a preset value, wherein the preset value is a quota corresponding to sending one satellite short message by the electronic device.

8. The method according to any one of claims 1 to 7, wherein the method further comprises:
displaying a second prompt message when the first parameter is less than a preset threshold, wherein the second prompt message indicates a current remaining quota of the satellite short message service to the user.

9. A method for calibrating satellite short message communication charging, wherein the method is performed by a server and comprises:
receiving a first value sent by an electronic device, wherein the first value is a value of a first parameter, and the first parameter is a remaining quota that is of a satellite short message service and that is stored in the electronic device;
determining a first calibration result based on the first value and a second value, wherein the first calibration result indicates whether the first value is consistent with the second value, the second value is a value of a second parameter, and the second parameter is a remaining quota that is of the satellite short message service of the electronic device and that is stored in the server; and
sending the first calibration result to the electronic device.

10. The method according to claim 9, wherein the method further comprises:
receiving a target satellite short message sent by a satellite, wherein the target satellite short message is sent by the electronic device to the satellite; and
updating the second parameter based on a preset value, wherein the preset value is a quota corresponding to sending one satellite short message by the electronic device.

11. The method according to claim 9 or 10, wherein after the sending the first calibration result to the electronic device, the method further comprises:
receiving a message sending record sent by the electronic device, wherein the message sending record is a message sending record that is between a target time and a current time and that is stored in the electronic device, and the target time is a time at which the first parameter is consistent with the second parameter;
obtaining a message receiving record between the target time and the current time; and
determining a second calibration result based on the message sending record and the message receiving record, and sending the second calibration result to the electronic device.

12. The method according to claim 11, wherein the determining a second calibration result based on the message sending record and the message receiving record comprises:
determining a calibrated remaining quota of the satellite short message service of the electronic device based on the message sending record and the message receiving record; and
using the calibrated remaining quota of the satellite short message service of the electronic device as the second calibration result.

13. The method according to claim 11, wherein after the sending the second calibration result to the electronic device, the method further comprises:
receiving a request message sent by the electronic device, wherein the request message is used to request the server to allocate manual calibration for the remaining quota of the satellite short message service of the electronic device;
obtaining a manual calibration result, wherein the manual calibration result comprises a calibrated remaining quota of the satellite short message service of the electronic device; and
sending the manual calibration result to the electronic device.

14. An electronic device, comprising at least one processor, wherein the at least one processor is coupled to at least one memory, and the at least one processor is configured to read a computer program stored in the at least one memory, to perform the method according to any one of claims 1 to 8.

15. An electronic device, comprising a plurality of functional modules, wherein the plurality of functional modules interact with each other, to implement the method according to any one of claims 1 to 8.

16. A server, comprising at least one processor, wherein the at least one processor is coupled to at least one memory, and the at least one processor is configured to read a computer program stored in the at least one memory, to perform the method according to any one of claims 9 to 13.

17. A server, comprising a plurality of functional modules, wherein the plurality of functional modules interact with each other, to implement the method according to any one of claims 9 to 13.

18. A computer-readable storage medium, wherein the computer-readable storage medium stores instructions, and when the instructions are run on a computer, the computer is enabled to perform the method according to any one of claims 1 to 8, or perform the method according to any one of claims 9 to 13.

19. A computer program product comprising instructions, wherein when the computer program product runs on a computer, the computer is enabled to perform the method according to any one of claims 1 to 8, or perform the method according to any one of claims 9 to 13.
